# EUROPEAN PATENT SPECIFICATION

(11) **EP 3 899 211 B1**
(45) Date of publication and mention of the grant of the patent: **29.10.2025**
(21) Application number: 19835413.6
(22) Date of filing: 20.12.2019
(51) Int. Cl.: F01D 25/16, F02C 7/24, F02C 9/18

(54) **GAS TURBINE ENGINE COMPRESSOR BLEED SYSTEM WITH PLENUM RESONANCE PREVENTION ARRANGEMENT**
ENTLÜFTUNGSSYSTEM FÜR EINEN GASTURBINENMOTORVERDICHTER MIT RESONANZVERHINDERUNGSANORDNUNG
SYSTÈME DE PURGE DE COMPRESSEUR DE MOTEUR À TURBINE À GAZ AVEC AGENCEMENT DE PRÉVENTION DE RÉSONANCE DE PLÉNUM

(30) Priority: 21.12.2018 GB 201821054
(43) Date of publication of application: 27.10.2021
(73) Proprietor: GKN Aerospace Sweden AB, 461 81 Trollhättan (SE)
(72) Inventor: ARROYO, Carlos, 461 81 Trollhättan (SE); WALLIN, Fredrik, 461 8 Trollhättan (SE); CARLSSON, Henrik, 461 81 Trolhättan (SE); ARONSSON, Egon, 461 81 Trollhättan (SE); BILLSON, Mattias, 461 81 Trollhättan (SE)
(74) Representative: D Young & Co LLP
(86) International application number: PCT/EP2019/086790
(87) International publication number: WO 2020/128038

(56) References cited:
- EP-A1- 2 977 617
- GB-A- 1 535 681
- US-A1- 2018 340 472
- US-B1- 8 511 096

## Description

### Background

The present invention relates to a gas turbine engine of the type used in aircraft. The invention is particularly, but not exclusively, applicable to commercial aircraft.

A conventional gas turbine engine comprises an air intake, a series of compressors, a combustor, a turbine and an exhaust outlet. The operation of a conventional gas turbine engine will be understood by a person skilled in the art and will not therefore be described in detail.

An invention described herein is concerned with an arrangement that can reduce/weaken flow phenomena that can result in aero-acoustic resonance of an engine bleed plenum.

The resonance can be dangerous for the rotating turbomachinery as the generated fluctuating pressure waves can lead to failure. Resonance can also generate noise but that is a secondary concern.

In respect of this secondary concern, aircraft noise is an important aspect of aircraft design and increasing demands are placed on aircraft manufacturers to reduce noise emissions to comply with increasing noise restrictions at airports and environmental constraints. If resonance can be reduced or prevented then associated noise caused by resonance can be prevented.

In order to prevent the stall of a compressor in different engine operating conditions a bleed passage may be provided, typically within the intermediate compressor structure.. The bleed passage is arranged to release air out of the primary flow path so as to divert air away from the compressors under certain operating conditions and to prevent a compressor stall. This allows gas turbine engines to continue operating at a wide range of operating conditions.

The air released through the bleed passage is communicated into a radially extending chamber or chambers (each being called a bleed plenum). Each plenum collects air before it is released into the bypass duct which surrounds the engine core. Each plenum provides a gaseous volume to receive the air which has been diverted from the compressors.

However, when there is little or no release of air through the bleed passage the high speed air passing through the primary flow path interacting with the entry of the bleed passage can create unsteady flow phenomena which may induce undesirable aero-acoustic effects in the bleed plenum in the form of fluctuating pressure waves due to resonance. These pressure waves can be damaging to the compressor and other structures. In order to prevent these damaging pressure waves from appearing, as described herein, the inventors have established that the geometry of the plenum can be advantageously designed such that the aero-acoustical resonance of the plenum does not occur near the engine operating range.

The inventors have devised a modified air bleed plenum which addresses these problems in a convenient manner.

US 8 511 096 B1 relates to a high bleed flow muffling system. US 2018/340472 A1 relates to a tunable resonator.

### Summary of the invention:

Aspects of an invention described herein are set out in the accompanying claims.

As defined in independent claims 1 and 2, there is provided a gas turbine engine comprising at least one radially or axially extending bleed passage in fluid communication with at least one generally circumferentially extending plenum (chamber), the at least one plenum having an upstream end in fluid communication with a bleed passage and one or several outlets for releasing air from the plenum, each plenum further comprising a downstream surface defining a downstream closed end of the plenum, wherein the downstream surface of one or more plenums is/are provided with an outwardly extending projection extending into the plenum, wherein the outwardly extending projection is in the form of a smooth convex surface and the smooth convex surface extends into the plenum.

Thus, the aero-acoustic performance of each, all or a subset of the plenums may be modified. The way in which the aero-acoustic performance of each plenum is modified may be according to predetermined aero-acoustic calculations for the engine and the engine's normal aero-acoustic performance.

Specifically, each plenum may be advantageously modified to remove an unwanted acoustic response which is generated within each plenum as a result of the high speed airflow in the primary flow path communicating with the plenum through the bleed passage. This may consequently prevent undesirable noise and vibration.

Advantageously all or part of the outwardly extending projections may extend from the downstream surface in an upstream direction towards the upstream end of the plenum. This modifies the inner volume and geometry of the plenum.

Thus, an outwardly extending projection may advantageously reduce the volume of a respective plenum and/or be arranged in use to cause positive interactions of pressure waves (i.e. positive or beneficial in the sense that it does not result in waves with a larger amplitude and the opposite of what the invention achieves).

The projections may be shaped to cause positive interaction of the pressure waves. Thus, the positive effect of the outwardly extending projections is not only due to volume reduction.

A plenum may comprise at least 1 outwardly extending projection or may comprise multiple outwardly extending projections. Thus, the aero-acoustic effect of the one or more outwardly extending projections can be selected according to the desired tested or predetermined performance of the plenum.

The plenum may be in the form of a circumferentially and radially extending chamber surrounding a central portion of the engine. The plenum may be subdivided into a plurality of individual plenums each allowing for optimisation of performance and size.

Advantageously all or a subset of the plurality of plenums may comprise one or more outwardly extending projections. The projections are arranged to extend into the volume of the plenum to change the internal geometry of the plenum.

According to the claimed invention, an outwardly extending projection may be in the form of a convex surface, the convex surface extending into the plenum. Such a convex surface provides a smooth surface against which air may flow. The exact shape may be predetermined by computation, testing or modelling. Advantageously the simplest shape could be a body of revolution. Additionally or alternatively more complex geometries could be used.

Additionally the projections may not be uniform i.e. different shapes of projection may be used in combination to achieve a fully optimised aero-acoustic effect within a given plenum or at a particular operating condition.

Such a convex surface may be formed by a hollow dome having an extending base portion connected to the downstream surface of a plenum. This may for example be oval or cylindrical or non-uniform in shape such as sinusoidal.

So as to further enhance the acoustic performance of the arrangement the outwardly extending projection may define a volume all or partially filled with a sound absorbing material. Still further, an outer surface of an outwardly extending projection may be or partially covered or coated in a sound absorbing layer or consisting of an acoustically absorbent material or structure.

The outer layer may additionally be perforated to allow some airflow through the surface and into the hollow projection.

According to the claimed invention, the closed end of the plenum is provided with coupling portions to receive an outwardly extending projection and to fix an outwardly extending projection thereto. Thus, the plenum may be adapted to provide a means to securely connect a projection to an inner surface thereof. The projections are incorporated into each plenum by means of a closed end of one or more plenums being provided with at least one opening through which an outwardly extending projection may be positioned. Such an arrangement may provide a more secure connection to the wall of the plenum and may facilitate installation.

Alternatively, a radial wall portion of the plenum is provided with at least one opening through which an outwardly extending projection may be positioned. Such an arrangement allows for maintenance and installation of a projection into a plenum from outside of the engine. A plenum wall may then be provided with a coupling arrangement to secure an inwardly extending projection thereto.

The area of the plenum surface over which a projection is positioned may be adapted according to the desired aero-acoustic performance and may, for example, include providing at least 50% of the surface of the rear end wall of the plenum distal end with an inwardly extending projection. An another arrangement the outer curved or cylindrical walls may additionally or alternatively be provided with outwardly extending projections. The surface coverage may be lower on a curved or cylindrical surface.

Viewed from another aspect of an invention described herein there is provided a method of modifying a gas turbine engine in accordance with claim 10.

Viewed from yet another aspect, there is provided an intermediate compressor structure for a gas turbine engine in accordance with the features of claim 11.

Viewed from yet another aspect there is provided a method of manufacturing a gas turbine engine in accordance with the steps defined in claim 12, method comprising determining the resonant frequency of one or more plenums and determining a desired resonant frequency of the plenum and modifying a plenum internal geometry consistent with the desired resonant frequency. For example, the plenum internal volume may be modified by an insert located within the plenum.

### Drawings

Aspects of the invention will now be described, by way of example only, with reference to the accompanying figures in which:
Figure 1 shows a cross-section of a gas turbine engine incorporating a plenum;
Figures 2A & 2B show cross-section through an aero-engine plenum;
Figure 3 shows a schematic of a conventional plenum volume;
Figure 4 shows a schematic of a modified plenum volume according to an invention described herein;
Figure 5 shows a modified plenum incorporating a plenum insert;
Figure 6 shows a plenum insert incorporating a sound abatement layer;
Figure 7 shows a segment arrangement of a plenum as described herein;
Figure 8 shows a concave plenum insert and installation method; and
Figures 9A, 9B and 9C show an alternative installation method for a modified plenum.

While the invention is susceptible to various modifications and alternative forms, specific embodiments are shown by way of example in the drawings and are herein described in detail. It should be understood however that the drawings and detailed description attached hereto are not intended to limit the invention to the particular form disclosed but rather the invention is to cover
all modifications falling within the scope of the invention as defined by the appended claims.

### Detailed Description

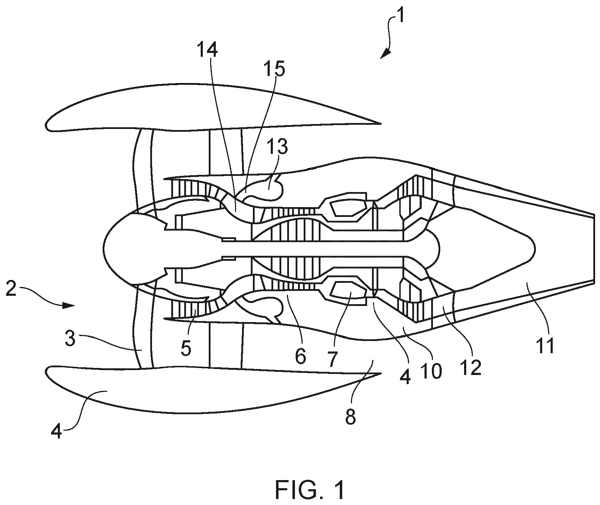

Figure 1 shows a cross-section of a gas turbine engine 1 incorporating an annular plenum 13.

The skilled person will understand the principal components of a gas turbine engine and their operation. In summary the engine 1 comprises an air intake 2 which permits air to flow into the engine to the fan 3 located at the upstream end of the engine. All of the components are housed within the engine nacelle 4.

The engine comprises a bypass channel downstream of the fan and a central engine core which contains the compressors, combustors and turbines. The core of the engine is formed of a first low pressure compressor 5 and a second high pressure compressor 6. This multi-stage compressor arrangement takes air from ambient pressure and temperature to high temperature and pressure. Compressed air is then communicated to the combustion chamber 7 where fuel is injected and combustion occurs.

The combustion gases are expelled from the rear of the combustions chamber 7 and impinge first on a high pressure turbine 9 and then on a second low pressure turbine 10 before leaving the rear of the engine through the core nozzle 11. Thrust from the engine is created by two gas flows: a first from the fan nozzle 8 (receiving thrust from the fan) and secondly from the exhaust gases from the core nozzle 11.

A transition duct 14 is arranged to receive air from the low pressure compressor 5 and communicate it radially inwards to be supplied to the high pressure compressor 6.

As shown both compressors are coaxial with the central axis of the turbine. The low pressure compressor 5 has a larger outer radius (measured from the central axis of the compressor) than the outer radius of the high pressure compressor 6 because of the efficiency reasons (examples discussed above).

This requires that the duct or channel communicating air between the two compressors is a generally S shaped to communicate the compressed air towards the central axis of the turbine and into the high pressure turbine 6.

As described herein, it is desirable to be able to release or bleed some air within the transition duct out of the engine. The bleed can be also positioned between the last LPC rotor and its OGV, although in such designs the OGV are usually at the very inlet of the transition duct and can be considered to be in it/part of it. This may be used to control the volume of air being passed to the high pressure compressor and prevent a compressor stall, for example.

As shown in figure 1 an outlet 15 is provided which provides an openable passage allowing air to selectively flow from the transition duct 14 to an annular chamber 13, often referred to as a plenum.

The plenum 13 may be arranged downstream of the low pressure compressor. Specifically the plenum may be arranged radially outside of the core and the bleed passage is usually located downstream of the LPC.

The plenum is an annular chamber extending all or part of the way around the engine and arranged to receive air that is released from the main flow path. In effect the plenum acts as a collecting chamber or reservoir for air released from the main flow path.

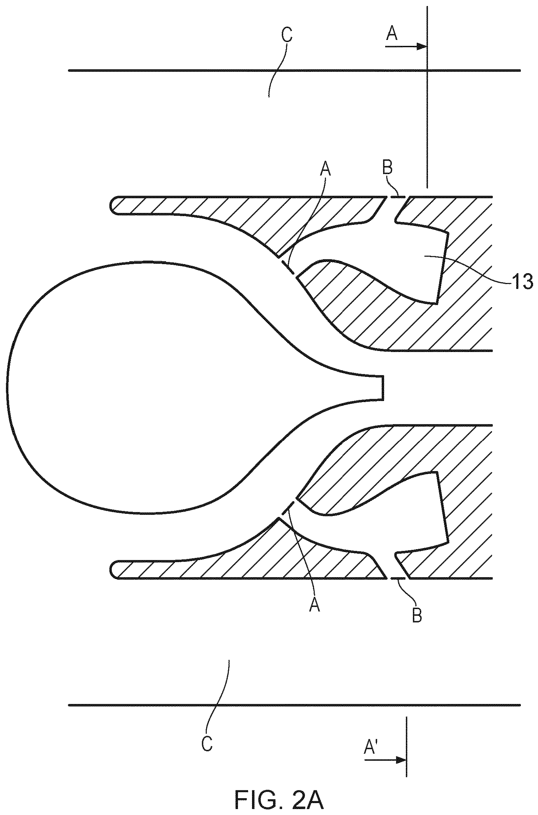

Figure 2A illustrates an enlarged cross-section view of the plenum and its position with respect to the core flow or main flow path and the transition duct. The air passing into the plenum in a conventional engine by means of the bleed passage connected to the main flow path at the location A. Air then leaves the plenum through a port or valve B proximate to the bypass channel C of the engine.

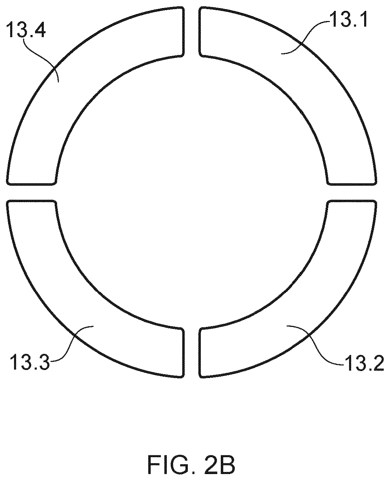

Figure 2B shows a cross-section through A-A' in Figure 2A. Figure 2B shows an arrangement in which the continuous plenum is sub-divided into 4 - 13.1, 13.2, 13.3 and 13.4. The spaces between each plenum may be used as part of the structure of the engine and also to allow services/control signals to pass radially inwards and outwards from the engine core. Different arrangements with more subdivisions or even with no sub-division are possible.

The plenum may be formed of a discrete component connected to the intermediate compressor structure or alternatively formed by walls themselves forming part of the intermediate compressor structure (ICS). Other terms are "compressor casing" or "compressor frame". It will be recognised that the walls of the plenum may belong to different components. For example, the plenum may be the space between the intermediate compressor structure, a firewall, a compressor outer casing and the core cowl

Although the plenum described herein is an annular arrangement, the plenum may be any suitable chamber arranged to receive the released air from the primary flow path.

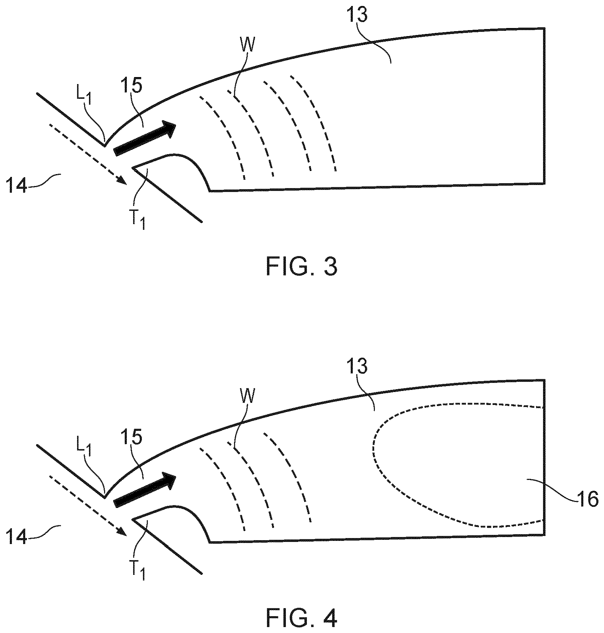

Figure 3 shows a cross-section through one portion of a plenum. It will be recognised that the plenum may be in the form of a torus extending around the engine and coaxial with the axis running along the engine core. The plenum may be a continuous chamber or may be a number of discrete chambers each performing the same function of collecting released air.

As shown schematically in figure 3, air passing through the main flow path 14 can induce flow phenomena at the inlet of passage 15, or transport flow phenomena from the upstream compressor to the inlet of passage 15, which then interacts with the plenum 13. The invention described herein is concerned with the aero-acoustic effects of this arrangement and how airflow in the main flow path can create unwanted acoustic and vibrational effects within the plenum and engine.

The plenum 13 defines a volume with characteristic resonant frequencies Fᵣ which depend on various factors of the plenum design and volume. The air in the main gas path passing over the inlet of the bleed passage 15 can cause excitation of air within the plenum at, for example, a frequency Fₑ.

In situations where the excitation frequency is close to or equal to a resonant frequency (i.e. when Fᵣ = Fₑ ) acoustic resonance may occur within the plenum creating highly undesirable aero-acoustic effects and potentially damaging vibrations within the engine.

The frequencies at which this resonance may occur will depend on operating conditions of the engine and the acoustic characteristics of the plenum.

Figure 4 shows a schematic of an invention described herein and the way the acoustic performance may be modified by consuming a portion of the plenum with an inwardly extending projection 16.

In figures 3 and 4 the outlet from the plenum (which would allow air to be released out of the engine in a generally radial direction) is not illustrated but will be understood by someone skilled in the art of aero-engines.

Figure 4 illustrates an invention described herein. Specifically, a modified plenum volume or chamber is provided by means of the projection 16. The cross-section is one example of such a or plurality of plenums.

More specifically, air (as shown by the dotted arrow) passes over the leading edge L1 and becomes an unstable shear layer of airflow as it passed over the opening to the plenum. The airflow then interacts with the trailing edge surface T1 where the air collides with the trailing edge surface. The unstable shear flow over the opening causes pressure waves W to propagate into the plenum and to resonate within the plenum causing the unwanted aero-acoustic effects.

According to the invention in the modified state the plenum has a modified acoustic performance by virtue of the modified geometry of the plenum as shown in figure 4. The specific geometry and extent to which the projection extends into the plenum volume is discussed in more detail below.

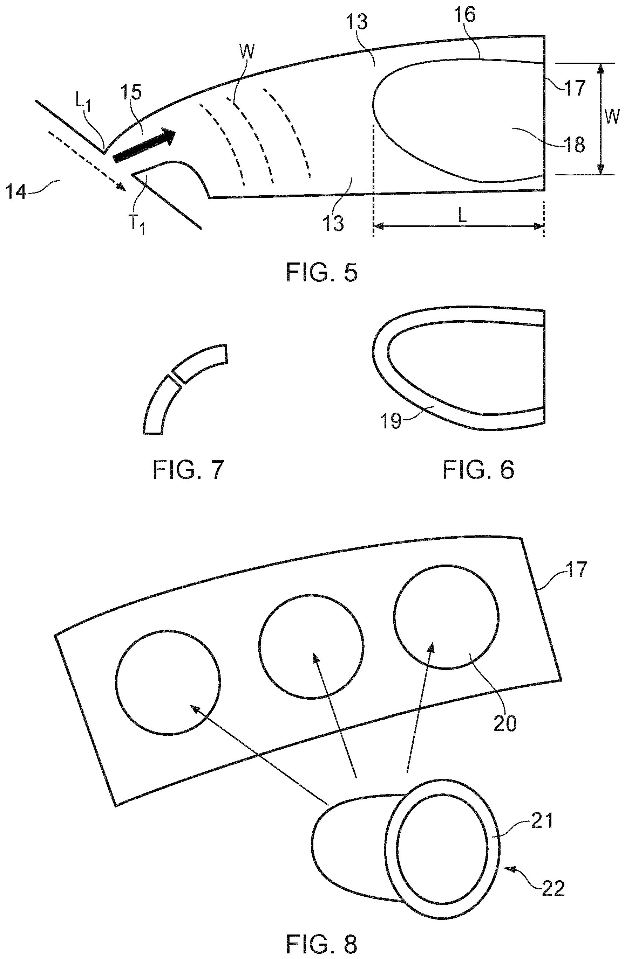

Figure 5, illustrates the inwardly extending projection in more detail.

The inwardly extending projection 16 is arranged to modify the plenum characteristics in a predetermined way. For a given engine and plenum configuration, the acoustic resonant frequencies of the plenum can be disrupted i.e. modified so as to prevent the unwanted plenum resonance occurring and therefore its damaging acoustic effects.

As shown in figure 5, the plenum comprises an end closed wall or surface 17 which forms the end of the plenum (and extends around all or part of the circumference of the engine). The plenum is arranged so as to extend from the wall 17 in an upstream direction towards the inlet 15. The precise shape and geometry of the plenum and the consequential volume change of the plenum may be calculated using acoustic analysis of the engine and the operating conditions which cause the unwanted resonance. For example the length *l* and width *w* of the plenum may be determined based on calculations or trials to establish a geometry that disrupts the resonant frequency. Similarly the curvature of the plenum insert 16 may further be selected according to those determinations.

The inwardly (that is into the plenum volume) extending projection 16 may be a solid component connected to the wall 17. Alternatively the surfaces of the extending projection may be covered with acoustic liners conveniently selected to provide sound absorbing properties to the projection or comprise a semi permeable wall allowing a weak acoustic communication between the inner and outer volumes of the modified plenum. The modification may be perforated in a similar to the way an acoustic liner face sheet operates.

In an arrangement where a perforated surface or projection is used a foam layer may be optional.

The foam may be conveniently selected to further enhance the acoustic properties of the projection. As stated above the surface of the projection extending into the plenum may be perforated to allow sound waves to penetrate into the projection where the foam (or other sound absorbing material) may further enhance the acoustic properties of the projection.

In such as arrangement the projection functions in multiple ways to control the pressure fluctuations and sound caused in the plenum. First, the geometry of the projection is selected to modify the resonant frequencies of the plenum in order to prevent pressure fluctuations due to resonance. Secondly the projection itself is provided with sound absorbing or sound abatement properties to further reduce the pressure fluctuations and vibrations that may occur as a result of those.

Alternatively, or additionally, as shown in figure 6 the projection may itself be provided with an outer layer 19 of sound absorbing material such as an acoustic liner conventionally used in other parts of a jet engine, e.g. the intake.

The inwardly extending projection may be any suitable shape according to the engine design and operation. For example the projection could be in the form of one or more projections distributed across the surface 17. The projections may be triangular prisms, convex portions or other suitable shapes which change the resonant frequencies of the plenum by consuming a portion of the internal volume and by promoting a "cancelling-out" interaction of the pressure waves in the plenum.

Figure 7 illustrates how the plenum inserts or projections may be sub-divided into a plurality of discrete portions, each portion extending around a portion of the plenum. Advantageously dividing the projection or insert allows inserts to be positioned in a non-continuous plenum i.e. a plenum that does not extend continuously around the engine circumference but is divided into individual sections or segments.

The plenum projections or inserts may be located into a plenum in a variety of ways.

Referring to figure 8, one such installation arrangement is illustrated. Here the surface 17 is provided with a plurality of apertures 20 through the surface and into the plenum. In the example shown a conical projection insert 21 is formed and located into each of the apertures. The ring 22 of the projections may then be coupled to the wall to hold the projections in position. The coupling may be a permanent coupling such as by welding or may alternatively be a selectively removable coupling allowing the insert to be removed and re-installed.

An arrangement shown in figure 8 may be designed as part of the initial engine design or may advantageously be retro-fitted to an existing engine or engine design by modification of the end wall of the plenum.

For a retrofit application, an aero-acoustic and also a structural assessment of the design would be needed. Then other changes could be required (reinforcement of that area, for instance).

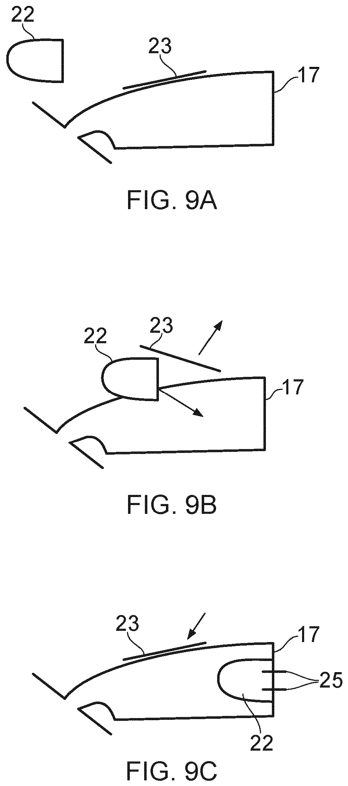

Figures 9A, 9B and 9C show an alternative installation arrangement for a plenum insert as described herein. In such an arrangement the plenum insert 22 is positioned into the plenum through an aperture 23 located on an outer surface of the plenum body. The aperture may be a removable panel for example allowing access to the plenum.

According to the installation arrangement the insert 22 passes through the aperture and is located against the rear wall 17 of the plenum. The insert may then be coupled to the wall structure, for example using bolts, rivets or other suitable connections to secure the insert to the inner wall of the plenum.

Furthermore, the plenum inserts may be non-uniformly spaced around the circumference of the engine, for example some plenums may not include an insert at all. Advantageously at least 50% of the circumference of the plenum may be provided with a suitable plenum insert i.e. at least 50% of the plenum circumference may be modified.

## Claims

1. A gas turbine engine (1) comprising at least one radially extending bleed passage (15) in fluid communication with at least one generally circumferentially extending plenum (13), the at least one plenum having an upstream end in fluid communication with a bleed passage and an outlet for releasing air from the plenum, each plenum further comprising a downstream surface defining a downstream closed end of the plenum, wherein the downstream surface of the one or more plenum(s) is/are provided with an outwardly extending projection (16) extending into the plenum, wherein the outwardly extending projection is in the form of a smooth convex surface and the smooth convex surface extends into the plenum, wherein the closed end of the one or more plenum(s) is/are provided with coupling portions to receive the outwardly extending projection and to fix the outwardly extending projection thereto and wherein the closed end of one or more plenum(s) is provided with at least one opening through which the outwardly extending projection is positioned.

2. A gas turbine engine (1) comprising at least one radially extending bleed passage (15) in fluid communication with at least one generally circumferentially extending plenum (13), the at least one plenum having an upstream end in fluid communication with a bleed passage and an outlet for releasing air from the plenum, each plenum further comprising a downstream surface defining a downstream closed end of the plenum, wherein the downstream surface of the one or more plenum(s) is/are provided with an outwardly extending projection (16) extending into the plenum, wherein the outwardly extending projection is in the form of a smooth convex surface and the smooth convex surface extends into the plenum, wherein the closed end of the one or more plenum(s) is/are provided with coupling portions to receive the outwardly extending projection and to fix the outwardly extending projection thereto and wherein a radial wall portion of the one or more plenum(s) is/are provided with at least one opening through which the outwardly extending projection is positioned.

3. An engine as claimed in claim 1 or 2, wherein all or part of the outwardly extending projections extend from the downstream surface in an upstream direction towards the upstream end of the plenum.

4. An engine as claimed in claim 1, 2 or 3, wherein the outwardly extending projection reduces the volume of a respective plenum and/or is arranged in use to cause positive interactions of pressure waves.

5. An engine as claimed in any preceding claim wherein the plenum is in the form of a circumferentially extending chamber surrounding a central portion of the engine.

6. An engine as claimed in claim 5, wherein the plenum is subdivided into a plurality of individual plenums.

7. An engine as claimed in any preceding claim, wherein the smooth convex surface is formed by a hollow dome having an extending base portion connected to the downstream surface of a plenum.

8. An engine as claimed in any preceding claim wherein the outwardly extending projection defines a volume all or partially filled with a sound absorbing material

9. An engine as claimed in any preceding claim, wherein an outer surface of the outwardly extending projection is all or partially covered or coated in a sound absorbing layer or consisting of a acoustically absorbent material or structure.

10. A method of modifying a gas turbine engine as set out in any of claims 1 to 9.

11. An intermediate compressor structure for a gas turbine engine as set out in any of claims 1 to 9.

12. A method of manufacturing a gas turbine engine as set out in any of claims 1 to 9, the method comprising determining the resonant frequency of one or more plenums and determining a desired resonant frequency of the plenum and modifying a plenum internal geometry consistent with the desired resonant frequency.

13. A method as claimed in claim 12, wherein the plenum internal volume is modified by an insert located within the plenum.

## Patentansprüche

1. Gasturbinentriebwerk (1), das mindestens einen sich radial erstreckenden Entlüftungskanal (15) in Fluidverbindung mit mindestens einem sich allgemein in Umfangsrichtung erstreckenden Sammelraum (13) umfasst, wobei der mindestens eine Sammelraum ein stromaufwärtiges Ende in Fluidverbindung mit einem Entlüftungskanal und einen Auslass zum Ablassen von Luft aus dem Sammelraum aufweist, wobei jeder Sammelraum ferner eine stromabwärtige Oberfläche umfasst, die ein stromabwärtiges geschlossenes Ende des Sammelraums definiert, wobei die stromabwärtige Oberfläche des einen oder der mehreren Sammelräume mit einem sich nach außen erstreckenden Vorsprung (16) versehen ist, der sich in den Sammelraum erstreckt, wobei der sich nach außen erstreckende Vorsprung die Form einer glatten konvexen Oberfläche aufweist und sich die glatte konvexe Oberfläche in den Sammelraum erstreckt, wobei das geschlossene Ende des einen oder der mehreren Sammelräume mit Kopplungsabschnitten versehen ist, um den sich nach außen erstreckenden Vorsprung aufzunehmen und den sich nach außen erstreckenden Vorsprung daran zu fixieren, und wobei das geschlossene Ende eines oder mehrerer Sammelräume mit mindestens einer Öffnung versehen ist, durch die der sich nach außen erstreckende Vorsprung positioniert ist.

2. Gasturbinentriebwerk (1), das mindestens einen sich radial erstreckenden Entlüftungskanal (15) in Fluidverbindung mit mindestens einem sich allgemein in Umfangsrichtung erstreckenden Sammelraum (13) umfasst, wobei der mindestens eine Sammelraum ein stromaufwärtiges Ende in Fluidverbindung mit einem Entlüftungskanal und einen Auslass zum Ablassen von Luft aus dem Sammelraum aufweist, wobei jeder Sammelraum ferner eine stromabwärtige Oberfläche umfasst, die ein stromabwärtiges geschlossenes Ende des Sammelraums definiert, wobei die stromabwärtige Oberfläche des einen oder der mehreren Sammelräume mit einem sich nach außen erstreckenden Vorsprung (16) versehen ist, der sich in den Sammelraum erstreckt, wobei der sich nach außen erstreckende Vorsprung die Form einer glatten konvexen Oberfläche aufweist und sich die glatte konvexe Oberfläche in den Sammelraum erstreckt, wobei das geschlossene Ende des einen oder der mehreren Sammelräume mit Kopplungsabschnitten versehen ist, um den sich nach außen erstreckenden Vorsprung aufzunehmen und den sich nach außen erstreckenden Vorsprung daran zu fixieren, und wobei ein radialer Wandabschnitt des einen oder der mehreren Sammelräume mit mindestens einer Öffnung versehen ist, durch die der sich nach außen erstreckende Vorsprung positioniert ist.

3. Triebwerk nach Anspruch 1 oder 2, wobei sich alle oder ein Teil der sich nach außen erstreckenden Vorsprünge von der stromabwärtigen Oberfläche in einer stromaufwärtigen Richtung zu dem stromaufwärtigen Ende des Sammelraums hin erstrecken.

4. Triebwerk nach Anspruch 1, 2 oder 3, wobei der sich nach außen erstreckende Vorsprung das Volumen eines jeweiligen Sammelraums reduziert und/oder im Gebrauch so angeordnet ist, dass er positive Wechselwirkungen von Druckwellen bewirkt.

5. Triebwerk nach einem der vorhergehenden Ansprüche, wobei der Sammelraum die Form einer sich in Umfangsrichtung erstreckenden Kammer aufweist, die einen mittleren Abschnitt des Triebwerks umgibt.

6. Triebwerk nach Anspruch 5, wobei der Sammelraum in eine Mehrzahl von einzelnen Sammelräumen unterteilt ist.

7. Triebwerk nach einem der vorhergehenden Ansprüche, wobei die glatte konvexe Oberfläche durch eine hohle Kuppel gebildet ist, die einen sich erstreckenden Basisabschnitt aufweist, der mit der stromabwärtigen Oberfläche eines Sammelraums verbunden ist.

8. Triebwerk nach einem der vorhergehenden Ansprüche, wobei der sich nach außen erstreckende Vorsprung ein Volumen definiert, das ganz oder teilweise mit einem schallabsorbierenden Material gefüllt ist

9. Triebwerk nach einem der vorhergehenden Ansprüche, wobei eine Außenfläche des sich nach außen erstreckenden Vorsprungs ganz oder teilweise mit einer schallabsorbierenden Schicht bedeckt oder beschichtet ist oder aus einem akustisch absorbierenden Material oder einer akustisch absorbierenden Struktur besteht.

10. Verfahren zum Modifizieren eines Gasturbinentriebwerks nach einem der Ansprüche 1 bis 9.

11. Zwischenverdichterstruktur für ein Gasturbinentriebwerk nach einem der Ansprüche 1 bis 9.

12. Verfahren zum Herstellen eines Gasturbinentriebwerks nach einem der Ansprüche 1 bis 9, wobei das Verfahren Bestimmen der Resonanzfrequenz eines oder mehrerer Sammelräume und Bestimmen einer gewünschten Resonanzfrequenz des Sammelraums und Modifizieren einer inneren Geometrie des Sammelraums in Übereinstimmung mit der gewünschten Resonanzfrequenz umfasst.

13. Verfahren nach Anspruch 12, wobei das Innenvolumen des Sammelraums durch einen Einsatz modifiziert wird, der sich in dem Sammelraum befindet.

## Revendications

1. Moteur à turbine à gaz (1) comprenant au moins un passage de prélèvement (15) s'étendant radialement, en communication fluidique avec au moins une chambre de tranquillisation (13) s'étendant généralement circonférentiellement, l'au moins une chambre de tranquillisation ayant une extrémité amont en communication fluidique avec un passage de prélèvement et une sortie pour libérer de l'air de la chambre de tranquillisation, chaque chambre de tranquillisation comprenant en outre une surface aval définissant une extrémité aval fermée de la chambre de tranquillisation, la surface aval de la ou des chambre(s) de tranquillisation étant pourvue d'une saillie (16) s'étendant vers l'extérieur, s'étendant dans la chambre de tranquillisation, la saillie s'étendant vers l'extérieur se présentant sous la forme d'une surface convexe lisse et la surface convexe lisse s'étendant dans la chambre de tranquillisation, l'extrémité fermée de la ou des chambre(s) de tranquillisation étant pourvue de parties d'accouplement destinées à recevoir la saillie s'étendant vers l'extérieur et à fixer la saillie s'étendant vers l'extérieur à celles-ci, et l'extrémité fermée d'une ou de plusieurs chambre(s) de tranquillisation étant pourvue d'au moins une ouverture à travers laquelle la saillie s'étendant vers l'extérieur est positionnée.

2. Moteur à turbine à gaz (1) comprenant au moins un passage de prélèvement (15) s'étendant radialement, en communication fluidique avec au moins une chambre de tranquillisation (13) s'étendant généralement circonférentiellement, l'au moins une chambre de tranquillisation ayant une extrémité amont en communication fluidique avec un passage de prélèvement et une sortie pour libérer de l'air de la chambre de tranquillisation, chaque chambre de tranquillisation comprenant en outre une surface aval définissant une extrémité aval fermée de la chambre de tranquillisation, la surface aval de la ou des chambre(s) de tranquillisation étant pourvue d'une saillie (16) s'étendant vers l'extérieur, s'étendant dans la chambre de tranquillisation, la saillie s'étendant vers l'extérieur se présentant sous la forme d'une surface convexe lisse et la surface convexe lisse s'étendant dans la chambre de tranquillisation, l'extrémité fermée de la ou des chambre(s) de tranquillisation étant pourvue de parties d'accouplement destinées à recevoir la saillie s'étendant vers l'extérieur et à fixer la saillie s'étendant vers l'extérieur à celles-ci, et une partie de paroi radiale de la ou des chambre(s) de tranquillisation étant pourvue d'au moins une ouverture à travers laquelle la saillie s'étendant vers l'extérieur est positionnée.

3. Moteur selon la revendication 1 ou 2, dans lequel l'ensemble ou une partie des saillies s'étendant vers l'extérieur s'étendent depuis la surface aval dans une direction amont vers l'extrémité amont de la chambre de tranquillisation.

4. Moteur selon la revendication 1, 2 ou 3, dans lequel la saillie s'étendant vers l'extérieur réduit le volume d'une chambre de tranquillisation respective et/ou est conçue pour provoquer, durant l'utilisation, des interactions positives d'ondes de pression.

5. Moteur selon l'une quelconque des revendications précédentes, dans lequel la chambre de tranquillisation se présente sous la forme d'une chambre s'étendant circonférentiellement, entourant une partie centrale du moteur.

6. Moteur selon la revendication 5, dans lequel la chambre de tranquillisation est subdivisée en une pluralité de chambres de tranquillisation individuelles.

7. Moteur selon l'une quelconque des revendications précédentes, dans lequel la surface convexe lisse est formée par un dôme creux ayant une partie de base saillante reliée à la surface aval d'une chambre de tranquillisation.

8. Moteur selon l'une quelconque des revendications précédentes, dans lequel la saillie s'étendant vers l'extérieur définit un volume entièrement ou partiellement rempli d'un matériau absorbant acoustique

9. Moteur selon l'une quelconque des revendications précédentes, dans lequel une surface extérieure de la saillie s'étendant vers l'extérieur est entièrement ou partiellement recouverte ou revêtue d'une couche absorbante acoustique ou constituée d'un matériau ou d'une structure absorbant(e) acoustique.

10. Procédé de modification d'un moteur à turbine à gaz selon l'une quelconque des revendications 1 à 9.

11. Structure de compresseur intermédiaire pour un moteur à turbine à gaz selon l'une quelconque des revendications 1 à 9.

12. Procédé de fabrication d'un moteur à turbine à gaz selon l'une quelconque des revendications 1 à 9, le procédé comprenant la détermination de la fréquence de résonance d'une ou de plusieurs chambre(s) de tranquillisation et la détermination d'une fréquence de résonance souhaitée de la chambre de tranquillisation et la modification d'une géométrie interne de la chambre de tranquillisation en fonction de la fréquence de résonance souhaitée.

13. Procédé selon la revendication 12, dans lequel le volume interne de la chambre de tranquillisation est modifié par une garniture placée à l'intérieur de la chambre de tranquillisation.
